# EUROPEAN PATENT SPECIFICATION

(11) **EP 0 912 375 B1**
(45) Date of publication and mention of the grant of the patent: **15.03.2000**
(21) Application number: 97929618.3
(22) Date of filing: 14.07.1997
(51) Int. Cl.: B60R 25/00

(54) **LOCKING DEVICE FOR AUTOMOTIVE GEARBOXES**
VERSCHLUSSVORRICHTUNG FÜR KRAFTFAHRZEUGSCHALTGETRIEBE
DISPOSITIF DE VERROUILLAGE POUR BOITE DE VITESSE AUTOMOBILE

(30) Priority: 19.07.1996 PL 31536896
(43) Date of publication of application: 06.05.1999
(73) Proprietor: Chmielecki, Czeslaw, 54-130 Wroclaw (PL); Gardyza, Leszek, 51-102 Wroclaw (PL); Piatkiewicz, Marek, 50-306 Wroclaw (PL); Piekutowski, Marek, 50-447 Wroclaw (PL)
(72) Inventor: Chmielecki, Czeslaw, 54-130 Wroclaw (PL); Gardyza, Leszek, 51-102 Wroclaw (PL); Piatkiewicz, Marek, 50-306 Wroclaw (PL); Piekutowski, Marek, 50-447 Wroclaw (PL)
(74) Representative: Baumgärtel, Gunnar
(86) International application number: PL9700017
(87) International publication number: WO9803375

(56) References cited:
- DE-U- 29 507 797
- FR-A- 2 729 112
- US-A- 4 565 080

## Description

The present invention is a locking device for automotive gearboxes that mechanically secures the gearshift lever, and thereby protects the automobile against theft.

Earlier Polish invention application P-304267 and Polish utility model application W-100764 describe a gearshift lever locking device, installed under the floor at the gearshift lever, and consisting of a bracket fastened to the automobile's structure, a lock assembly attached to the bracket, and a locking bolt. In the design described in those applications, two parallel openings pass through the whole length of the lock assembly, one housing the locking bolt, and the other, the shaft that attaches the lock assembly to the bracket. The lock assembly comprises a body, a rotor assembly and a key that move a set of slides, a housing that encases the body, and a cover that shields the set of slides. The bolt that locks the gearshift lever has at its end, a head with a spring permanently fastened to it (the head protrudes from the housing), and along its circumference, a neck into which the set of slides fits.

Other devices which lock the automotive gearshift lever in order to prevent the stealing of the vehicle, are described in the French patent specification FR-A-2 729 112 and the specification of the German utility model No. DE-U-295 07 797.

The device described in the specification FR-A-2 729 112 consists of a housing permanently attached to the floor of the vehicle, inside which the ball of the gearshift lever and a locking mechanism with a pin are located. The lower end of the gearshift lever is provided with a lid, which is connected to the horizontal rod that controls the gearbox; an aperture in an element fixed to the bottom of the lid, places itself perpendicular to the locking pin when the gearshift lever is set in the "reverse" position. The locking mechanism consists of a guiding tube welded to the housing and located in such manner that it places itself perpendicular to the aperture in the element fixed to the lid of the lower end of the gearshift lever when the gearshift lever is set in the "reverse" position. A return spring, the locking pin and a lock with a pawl which mates with a bolt plate, are inserted within the guiding tube. The device's locking mechanism is activated by manual pressure on the edge of the lock after having set the gearshift lever of the vehicle in the "reverse" position, whereupon the locking pin enters the aperture in the element fixed to the lid of the lower end of the gearshift lever and locks the latter, and the lock pawl places itself in a position relative to the bolt plate where it makes it impossible to withdraw the pin and unlock the lever. Furthermore, the design of the device features an electrical protection against theft by means of switching off the electrical power supply to the vital equipment of the vehicle.

The locking device described in the specification of the utility model No. DE-U-295 07 797 is designed to be applied with an automatic gearbox, and comprises a shield tube which encases the gearshift lever, and a sliding lock with a vertical bolt, which lock is adjacent to the shield tube; the vertical bolt is located next to the gearshift lever when the latter is set in the "parking" position. Another component of the device is a steel plate attached to the top surface of the gearshift lever cover, which plate features an aperture corresponding to the aperture which holds the lever in the cover. As the gearshift lever is being set in the "parking" position and the lock is being pressed down, its bolt enters the gearshift lever aperture, making it impossible to change the position of the lever.

The essence of the present invention is that it features a bracket which is permanently fastened to the automobile's structure, an outer sleeve which is attached to the latter, and a locking unit which may be removed from the sleeve. The locking unit consists, on the one side, of a bolt which locks or unlocks the gearshift lever, and on the other side, of the body which slides inside the outer sleeve and houses a rotating lock and a recessed catch activated by a click spring. The lock of the locking unit incorporates a projection, which is eccentric with regard to the axis of the locking unit; the projection mates with the catch recess, inserting the catch into a circumferential groove inside the outer sleeve when the locking unit is set in the locking position inside the outer sleeve. A return spring is suspended between the bracket and the body within the outer sleeve; the location of the spring is such that after the lock has turned and released the catch from the circumferential groove, the spring unlocks the locking unit and allows it to be removed from the outer sleeve. The lock inside the locking unit is a disk lock.

The design of the invented device is such that the only items permanently installed in the automobile are the bracket and the sleeve holding the lock. Since the device is engaged by means of sliding the locking unit into the sleeve, if the lock, which is the crucial component of the device, is damaged, only the locking unit containing the lock has to be replaced, and it is not necessary to remove the bracket and mount a new device. Furthermore, when the automobile is being overhauled or repaired, the locking unit, which contains the lock, need not remain inside it and may be taken out. This prevents unauthorized persons from gaining access to the lock. Finally, the device is very easy to install.

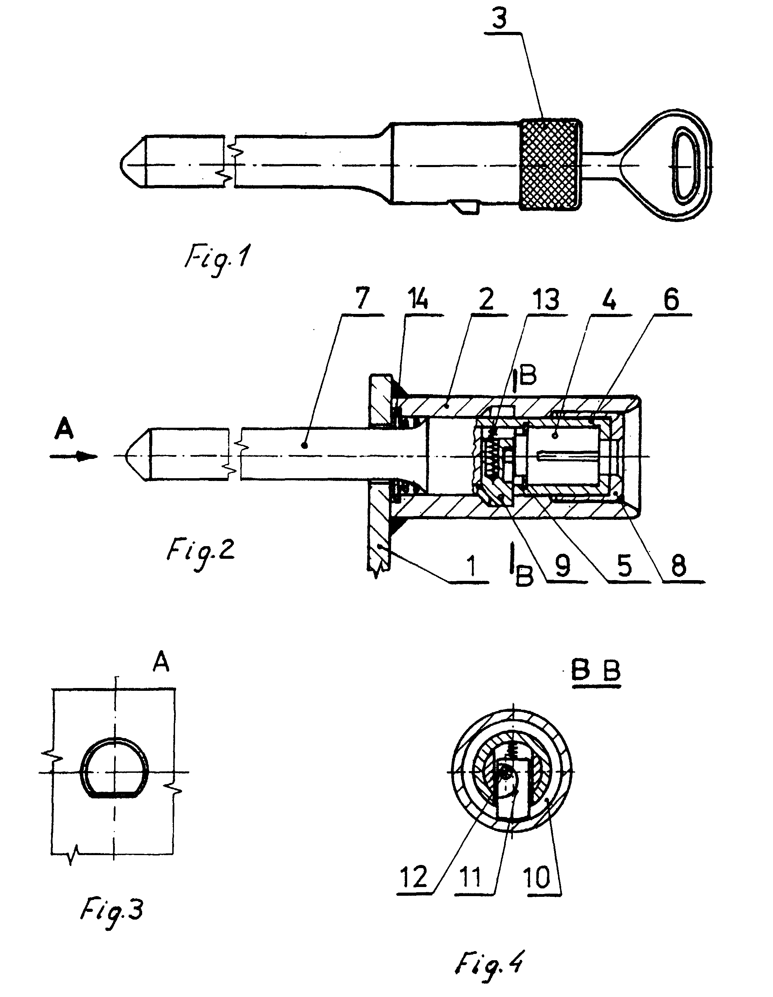

The enclosed Figures illustrate a version of the device: Fig. 1 shows the exterior of the locking unit with the key in it; Fig. 2 is a longitudinal section of the device; Fig. 3 is its exterior view from the bracket; and Fig. 4 is a cross section of the device.

The locking device for automotive gearboxes consists of a bracket 1 and an outer sleeve 2, which are permanently fastened to the automobile's structure, and a locking unit 3, which is a rod with a disk lock 4 inside. A mounting ring 5 holds the lock 4 in the body 6, which is an integral part of the locking unit 3. The locking unit 3 is coaxial, at its one end, with a locking bolt 7 having the shape of a truncated cylinder, and at its other end, with a shielding sleeve 8. The body 6 incorporates a catch 9, which fits into a circumferential groove 10 inside the outer sleeve 2; the catch 9 is engaged and released by means of the lock 4, via a recess 11 in the catch's 9 side and an eccentric projection 12 in the lock 4, and by means of a click spring 13 located inside the catch 9. A return spring 14 is mounted in the outer sleeve 2, at the point where the latter is attached to the bracket 1.

The invented device is installed near the automobile's gearshift lever; as the rod of the locking unit slides into the outer sleeve, the lever, set in the "reverse" or "parking" position, is secured in its current position. When the locking unit is being introduced into the opening of the outer sleeve, the catch located within the former moves inward, contracting the click spring inside the catch. At the same time, the locking unit's flare presses the return spring, located inside the outer sleeve. As the locking unit slides further into the outer sleeve, the catch is brought to the circumferential groove inside the sleeve, and is pushed into the groove by means of the click spring inside the catch. At this moment, the device has been set in its locking position. The gearshift lever is released by means of taking the locking unit out of the outer sleeve and thereby removing it from the vicinity of the automobile's gearshift lever: the key is turned in the lock, the catch withdraws into the locking unit, and the return spring inside the outer sleeve, contracted when the locking unit was introduced into the opening of the sleeve, now pushes the unit out and releases the gearshift lever.

## Claims

1. A locking device for automotive gearboxes, whose distinctive features are that it consists of a bracket (1) which is permanently fastened to the automobile's structure, an outer sleeve (2) which is attached to the latter, and a locking unit (3) which may be removed from the outer sleeve (2), and which locking unit (3) consists, on the one side, of a bolt (7) which locks or unlocks ***a*** gearshift lever, and on the other side, of ***a*** body (6) which slides inside the outer sleeve (2) and houses a rotating lock (4) incorporating a projection (12), which is eccentric with regard to the roll axis of the ***lock (4),*** and a catch (9) with a recess (11), which catch (9) is activated by a click spring (13) and mates with ***said*** projection (12) in such manner that the catch ***(9)*** is inserted into a circumferential groove (10) inside the outer sleeve (2) when the locking unit (3) is set inside the outer sleeve (2) in the position where it locks the gearshift lever, and that a return spring (14) is suspended between the bracket (1) and the body (6) within the outer sleeve (2), which return spring (14) is located in such manner that after the lock (4) has turned and released the catch (9) from the circumferential groove (10), the return spring (14) unlocks the locking unit (3) and allows it to be removed from the outer sleeve (2).

2. The device specified in claim 1, whose distinguishing feature is that the lock (4) is a disk lock.

## Patentansprüche

1. Verriegelungsvorrichtung für Getriebegehäuse von Kraftfahrzeugen, die dadurch charakterisiert ist, daß sie besteht aus einem Träger (1), der fest mit dem Automobilgestell verbunden ist, aus einer äußeren Hülse (2), die an dem Träger (1) befestigt ist, und aus einer Schließeinheit (3), die aus der äußeren Hülse (2) entfernt werden kann, wobei die Schließeinheit (3) auf der einen Seite aus einem Bolzen (7) besteht, der einen Schalthebel sichert oder freigibt, und auf der anderen Seite aus einem Körper (6) besteht, der in der äußeren Hülse (2) gleitet und einen Drehriegel (4) enthält, welcher einen Vorsprung (12) aufweist, der exzentrisch in Bezug auf die Drehachse des Drehriegels (4) ist, und welcher eine Arretierung (9) mit einer Ausnehmung (11) aufweist, wobei die Arretierung durch eine Sperrfeder (13) aktiviert wird, die mit dem Vorsprung (12) derart zusammenwirkt, daß die Arretierung (9) in eine umlaufende Nut (10) in der äußeren Hülse (2) eingeführt wird, wenn die Schließeinheit (3) in der äußeren Hülse (2) in die Position gebracht wird, in der sie den Schalthebel blokkiert, und daß eine Rückstellfeder (14) zwischen der Halterung (1) und dem Körper (6) in der äußeren Hülse (2) eingehängt ist, wobei die Rückstellfeder (14) derart angeordnet ist, daß die Rückstellfeder (14) die Schließeinheit (3) freigibt und es erlaubt, diese aus der äußeren Hülse (2) zu entfernen, nachdem der Riegel (4) sich gedreht und die Arretierung (9) aus der umlaufenden Nut entriegelt hat.

2. Vorrichtung nach Anspruch 1, die dadurch charakterisiert ist, daß der Riegel (4) als Scheibenriegel ausgebildet ist.

## Revendications

1. Dispositif de verrouillage pour boîtes de vitesses d'automobiles, caractérisé en ce qu'il comprend un support (1) faisant corps avec la structure de l'automobile, un manchon extérieur (2) fixé à cette dernière, et un dispositif de verrouillage (3) qui peut être retiré du manchon extérieur (2), lequel dispositif de verrouillage (3) comporte, d'un côté, un verrou (7) qui verrouille ou déverrouille un levier de changement de vitesse, et de l'autre côté un corps (6) qui pénètre en coulissant à l'intérieur du manchon extérieur (2) et contient un verrou rotatif (4) présentant une saillie (12), excentrée par rapport à l'axe longitudinal du verrou (4), et un loquet (9) avec un creux (11), lequel loquet (9) est actionné par un cliquet-ressort (13) et coopère avec ladite saillie (12) de façon que le loquet (9) soit inséré dans une rainure circonférentielle (10) présente à l'intérieur du manchon extérieur (2) lorsque le dispositif de verrouillage (3) est mis à l'intérieur du manchon extérieur (2) dans la position où il verrouille le levier de changement de vitesse, et en ce qu'un ressort de rappel (14) est suspendu entre le support (1) et le corps (6) à l'intérieur du manchon extérieur (2), lequel ressort de rappel (14) est disposé de façon qu'après que le verrou (4) a tourné et sorti le loquet (9) de la rainure circonférentielle (10), le ressort de rappel (14) déverrouille le dispositif de verrouillage (3) et permet de retirer celui-ci du manchon extérieur (2).

2. Dispositif selon la revendication 1, caractérisé en ce que le verrou (4) est un verrou à disque.
